# EUROPÄISCHE PATENTANMELDUNG

(11) **EP 1 767 093 A2**
(43) Veröffentlichungstag der Anmeldung: **28.03.2007**
(21) Anmeldenummer: 06018632.7
(22) Anmeldetag: 06.09.2006
(51) Int. Cl.: A01N 43/80, A01N 47/12, A01N 37/34, A01N 35/08, A01N 35/02, A01N 25/22, A01P 1/00

(54) **Biozide Zusammensetzungen enthaltend ein Isothiazolinbiozid und N-Methyl-2-Pyrrolidon**

(30) Priorität: 21.09.2005 DE 102005045003
(71) Anmelder: Clariant Produkte (Deutschland) GmbH, 65929 Frankfurt am Main (DE)
(72) Erfinder: Falk, Uwe, Dr., 63486 Bruchköbel (DE); Walter, Michael, Marcus, 65835 Liederbach (DE); Bloomer, Matthew, Guiseley Leeds LS209DN (GB)
(74) Vertreter: Mikulecky, Klaus

(57) **Zusammenfassung**

Gegenstand der Erfindung sind Zusammensetzungen, enthaltend mindestens ein Isothiazolin mit biozider Wirksamkeit und N-Methyl-2-Pyrrolidon.

## Beschreibung

Die vorliegende Erfindung betrifft biozide Zusammensetzungen in Form von Lösungen, enthaltend mindestens einen bioziden Wirkstoff aus der Gruppe der lsothiazoline und N-Methylpyrrolidon (NMP) und deren Verwendung als Konservierungsmittel.

Biozide kommen in unterschiedlichsten Anwendungsgebieten zum Einsatz, um das Wachstum von Mikroorganismen zu kontrollieren oder zu verhindern und damit die Konservierung von Produkten und Materialien zu gewährleisten. Wichtige Anwendungsgebiete sind die Konservierung von Acrylfarben oder wasserbasierenden Klebemitteln oder die Oberflächenbehandlung.

Ein sehr effizientes und vielseitig einsetzbares Industrie-Biozid ist 1,2-Benzoisothiazolin-3-on (BIT). BIT hat eine geringe Wasserlöslichkeit und wird daher in organischen Lösungsmitteln dargeboten. In zahlreichen Schriften wird der Einsatz von Glykolen zum Lösen von Bioziden vorgeschlagen. In EP-A-680 257 wird eine stabile Zusammensetzung aus 1,2-Benzoisothiazolin-3-on und 40 bis 68 Gew.-% Dipropylenglykol offenbart. In US-5 684 025 werden Polyglykole zum Lösen biozider Wirkstoffe verwendet. Glykole haben jedoch nur mäßiges Lösungsvermögen für 1,2-Benzoisothiazolin-3-on, und sind daher zur Herstellung stabiler hochkonzentrierter BIT-Lösungen unzureichend. Zudem erfüllen sie die hohen Anforderungen an die chemische und physikalische Stabilität unter extremen Temperaturbedingungen bei langen Lagerzeiten nicht befriedigend.

Andere Lösungsmittel, wie Amine oder kurzkettiger Alkohole, sind leichtflüchtig, geruchsintensiv oder verursachen Verfärbungen, und sind somit ungeeignet.

Aufgabe war daher, Lösungsmittel oder Lösungsmittelgemische zu finden, mit denen hochkonzentrierte Lösungen aus Isothiazolinen, bevorzugt aus 1,2-Benzoisothiazolin-3-on, gegebenenfalls kombiniert mit weiteren Bioziden, hergestellt werden können, die auch bei niedrigen Temperaturen keine Kristallisationsneigung zeigen.

Überraschend wurde nun gefunden, dass N-Methyl-2-Pyrrolidon (NMP) Isothiazoline, insbesondere 1,2-Benzoisothiazolin-3-on, und eine Vielzahl weiterer biozider Wirksubstanzen zu lösen vermag, die Kompatibilität von Inhaltsstoffen biozider Formulierungen (biozide Wirksubstanz/en, Adjuvants, Dispergiermittel, Elektrolyte etc.) mit sehr unterschiedlichen physikalisch-chemischen Eigenschaften verbessert, auch unter starker Temperaturbelastung stabil ist und ein Auskristallisieren der bioziden Wirksubstanz verhindert.

Gegenstand der Erfindung sind Zusammensetzungen, enthaltend mindestens ein Isothiazolin mit biozider Wirksamkeit und N-Methyl-2-Pyrrolidon.

Ein weiterer Gegenstand der Erfindung ist die Verwendung von N-Methyl-2-Pyrrolidon (NMP) als Lösemittel für mindestens ein Isothiazolin mit biozider Wirksamkeit.

Ein weiterer Gegenstand der Erfindung ist ein Verfahren zur Herstellung einer Lösung, enthaltend mindestens ein Isothiazolin mit biozider Wirksamkeit, indem man das Isothiazolin mit biozider Wirksamkeit in N-Methyl-2-Pyrrolidon löst.

Biozide Wirksubstanz im Sinne dieser Erfindung ist jeder Stoff, der in der Lage ist, Mikroorganismen, wie Bakterien, Algen oder Pilze abzutöten. Biozide Wirksamkeit ist die Fähigkeit einer bioziden Wirksubstanz, Mikroorganismen, wie Bakterien, Algen oder Pilze, abzutöten.

Biozide Wirksubstanz sind Isothiazoline sowie deren Derivate. Unter lsothiazolinen (die im Folgenden ihre Derivate umfassen) versteht man Verbindungen mit der Struktureinheit 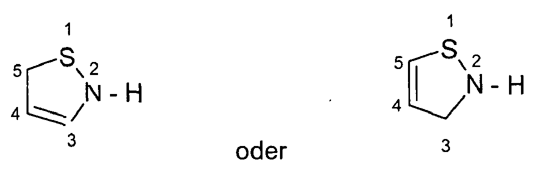 sowie deren Derivate, die an den Positionen 2, 3, 4 und/oder 5 Substituenten tragen können. Solche Substituenten können beispielsweise lineare, verzweigte oder cyclische Kohlenwasserstoffgruppen, Halogenatome oder Carbonylgruppen sein. Als Kohlenwasserstoffgruppen sind C₁- bis C₁₂-Alkylgruppen, Phenylgruppen und kondensierte aromatische Systeme bevorzugt.

Weitere bevorzugte Derivate des Isothiazolins sind Isothiazolinone der Formel 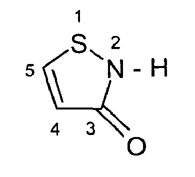 welche Substituenten wie die oben beschriebenen Isothiazoline tragen können.

Isothiazoline mit biozider Wirksamkeit sind beispielsweise nicht-halogenierte Isothiazoline. Geeignete nicht-halogenierte Isothiazoline sind etwa 2-Methyl-3-isothiazolin, 2-Methyl-4-Isothiazolin-3-on, 2-Ethyl-3-isothiazolin, 2-Propyl-3-isothiazolin, 2-Isopropyl-3-isothiazolin, 2-Butyl-3-isothiazolin (worin Butyl für n-Butyl, iso-Butyl oder tert-Butyl stehen kann), 2-n-Octyl-3-Isothiazolin, 2-Octyl-4-isothiazolin-3-on oder 1,2-Benzisothiazolin-3-on oder sein Alkali- oder Ammoniumsalz.

Isothiazoline mit biozider Wirksamkeit sind beispielsweise halogenierte Isothiazoline. Geeignete halogenierte Isothiazoline sind etwa 5-Chloro-2-Methyl-3-Isothiazolin, 5-Chloro-2-Methyl-4-Isothiazolin-3-on oder 4,5-Dichloro-2-(n-octyl)-4-isothiazolin-3-on.

Das bevorzugte Isothiazolin ist 1,2-Benzoisothiazolin-3-on und/oder sein Alkali- oder Ammoniumsalz, insbesondere sein Natriumsalz.

1,2-Benzisothiazolin-3-on entspricht der Formel 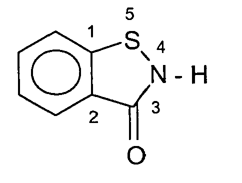 In einer bevorzugten Ausführungsform der Erfindung wird mehr als ein Isothiazolin in NMP gelöst. Es kann sich dabei vorzugsweise um eine Mischung aus 2 nicht halogenierten Isothiazolinen, oder um eine Mischung aus einem nicht halogenierten und einem halogenierten Isothiazolin handeln.

In einer besonders bevorzugten Ausführungsform der Erfindung wird 1,2-Benzisothiazolin-3-on und/oder das 1,2-Benzisothiazolin-3-on-Alkalisalz oder Ammoniumsalz , insbesondere das Natriumsalz, in NMP gelöst, wobei die Herstellung der Lösung in der Weise erfolgt, dass eine auf ca. 60 - 70°C erwärmte Lösung aus NMP und Alkali- oder Ammoniumhydroxid mit 1,2-Benzisothiazolin-3-on zu einer klaren Lösung homogenisiert wird, wobei das molare Verhältnis von 1,2-Benzisothiazolin-3-on zum Hydroxid im Bereich von 1 zu 0,5 bis1,5, bevorzugt 1 zu 0,6 bis 1,2, besonders bevorzugt 1 zu 0,75 -1,05 liegt.

Die erfindungsgemäßen Zusammensetzungen können in einer bevorzugten Ausführungsform neben mindestens einem Isothiazolin mindestens eine weitere biozide Wirksubstanz enthalten, die kein Isothiazolin ist. Bevorzugte weitere biozide Wirksubstanzen sind

Triazine, beispielsweise 1,3,5-Tris(2-hydroxyethyl)hexahydro-S-triazin, 1,5-Trimethyl-[2H,4H,6H]-Hexahydro-1,3,5-S-Triazin, Methylen-bis-morpholin, Oxazolidin, 3-lodo-2-Propynylbutylcarbamat, 2-Bromo-2-Nitropropandiol, Glutaraldehyd, Glutardialdehyd, Natrium 2-Pyridinethiol-1-oxid, p-Hydroxybenzoesäurealkylester, Tris(hydroxymethyl)nitromethan, Dimethylol-dimethylhydantoin, 1,6-Dihydroxy-2,5-dioxahexan; 1,2-Dibromo-2,4-dicyanobutan; 3-(3,4-dichlorphenyl)-1,1-dimethylharnstoff (Diuron); N-cyclopropyl-N'-(1,1-dimethylethyl)-6-(methylthio)-1,3,5-triazin-2,4-diamin; Methylbenzimidazol-2-ylcarbamat (Carbendazim); N-(1,1-dimethylethyl)-N'-ethyl-6-(methylthio)-1,3,5-triazin-2,4-diamin (Terbutryn); 4-Chloro-3,5-dimethylphenol; 2,4-Dichloro-3,5-dimethylphenol; 2-Benzyl-4-chlorphenol; 2,2'-Dihydroxy-5,5'-dichloro-diphenyl-methan; p-tertiär-amylphenol; o-Phenylphenol; Natrium-o-phenylphenol; p-Chloro-m-cresol; 2-(Thiocyanomethylthio)-benzthiazol; 3,4,4'-Trichlorcarbanilid; 1-Hydroxy-2-pyridinthion-Zink; 1-(4-Chlorphenyl)-4,4-dimethyl-3-(1 H-1,2,4-triazol-1-ylmethyl)-pentan-3-ol (Tebuconazol), 1-[2-(2,4-dichlorphenyl)-4-propyl-1,3-dioxolan-2-ylmethyl)-1H-1,2,4-triazol (Propiconazol), 3-lodo-2-Propynylbutylcarbamat, 2-Bromo-2-Nitropropandiol, Formaldehyd; Harnstoff; Glyoxal; 2,2'-Dithio-bis-(pyridine-N-oxid), 3,4,4-Trimethyloxazolidin, 4,4-Dimethyloxazolidin, N-hydroxy-methyl-N-methyldithiocarbamat, Kaliumsalz Adamantan, N-Trichloromethyl-thiophthalimid, 2,4,5,6-Tetrachloroisophthalonitril, 2,4,5-Trichlorophenol, dehydroacetic acid, Kupfernaphthenat, Kupferoctoat, Tributylzinnoxid, Zinknaphthenat, Kupfer-8-quinolat.

Des Weiteren kommen Biozide aus der Gruppe der quaternären Ammoniumverbindungen in Betracht, bevorzugt Alkyldimethylammoniumchloride, wie beispielsweise Cocosdimethylammoniumchlorid, Dialkyldimethylammoniumchloride, wie beispielsweise Dicocosdimethylammoniumchlorid, Alkyldimethylbenzylammoniumchloride, wie beispielsweise C_{12/14}-Dimethylbenzylammoniumchlorid oder Cocosdimethyldichlorobenzylammoniumchlorid.

Erfindungsgemäß können die bioziden Zusammensetzungen bis zu 80 Gew.-%, bevorzugt 5 bis 60 Gew.-%, besonders bevorzugt bis 30 Gew.-% eines oder mehrerer biozider Wirkstoffe und 10 bis 99 Gew.-%, bevorzugt 15 Gew.-% bis 80 Gew.-%, besonders bevorzugt 20 bis 70 Gew.-% N-Methyl-2-Pyrrolidon (NMP) bezogen auf die fertigen bioziden Zusammensetzungen, enthalten. Diese werden üblicherweise in solchen Gewichtsmengen zur Anwendung gebracht, dass von 0,0001 Gew.-% bis 5 Gew.-%, bevorzugt 0,0002 Gew.-% bis 3 Gew.-%, besonders bevorzugt von 0,0005 Gew.-% bis 1 Gew.-% des oder der bioziden Wirkstoffe, bezogen auf das zu behandelnde Substrat oder das behandelte Endprodukt, zur Anwendung kommen.

Ein bevorzugter Gegenstand der Erfindung sind Zusammensetzungen, enthaltend,
a) mindestens ein Isothiazolin mit biozider Wirksamkeit in Gewichtsmengen von 10 % bis 60 %, bevorzugt 30 % bis 55 %, besonders bevorzugt 40 % bis 52 % bezogen auf die biozide Zusammensetzung, und
b) N-Methyl-2-Pyrrolidon (NMP).

Ein weiterer bevorzugter Gegenstand der Erfindung sind Zusammensetzungen, enthaltend
a) mindestens ein nicht halogeniertes Isothiazolin mit biozider Wirksamkeit in Gewichtsmengen von 10 % bis 60 %, bevorzugt 30 % bis 55 %, besonders bevorzugt 40 % bis 52 % bezogen auf die biozide Zusammensetzung, und
b) mindestens ein halogeniertes Isothiazolin mit biozider Wirksamkeit in Gewichtsmengen von 0,1 bis 15 Gew.-%, bevorzugt 0,2 bis 10 Gew.-%, besonders bevorzugt 0,3 bis 5 Gew.-% bezogen auf die biozide Zusammensetzung, und
c) N-Methyl-2-Pyrrolidon (NMP).

Ein weiterer bevorzugter Gegenstand der Erfindung sind Zusammensetzungen, enthaltend
a) mindestens ein nicht halogeniertes Isothiazolin mit biozider Wirksamkeit in Gewichtsmengen von 10 % bis 60 %, bevorzugt 30 % bis 55 %, besonders bevorzugt 40 % bis 52 % bezogen auf die biozide Zusammensetzung, und
b) mindestens ein halogeniertes Isothiazolin mit biozider Wirksamkeit in Gewichtsmengen von 0,1 bis 15 Gew.-%, bevorzugt 0,2 bis 10 Gew.-%, besonders bevorzugt 0,3 bis 5 Gew.-% bezogen auf die biozide Zusammensetzung,
c) mindestens eine weitere biozide Wirksubstanz in Gewichtsmengen von 3 bis 15 Gew.-%, bevorzugt 7 bis 13 Gew.-%, besonders bevorzugt 9 bis 12 Gew.-% bezogen auf die biozide Zusammensetzung, und
c) N-Methyl-2-Pyrrolidon (NMP).

Ein weiterer bevorzugter Gegenstand der Erfindung sind Zusammensetzungen, enthaltend
a) 1,2-Benzoisothiazolin-3-on
b) Chlor-2-methyl-4-isothiazolin-3-on
c) 2-Methyl-4-isothiazolin-3-on
d) 1,6-Dihydroxy-2,5-dioxahexan
e) N-Methyl-2-Pyrrolidon (NMP).

Diese besonders bevorzugte Zusammensetzungen aus den Komponenten a) bis e), enthält die bioziden Wirkstoffe a), b), c) und d) zusammen in Gewichtsmengen von 5 % bis 60 %, bevorzugt 10 % bis 30 %, besonders bevorzugt 11 % bis 15 % bezogen auf die biozide Zusammensetzung. Die biozide Zusammensetzung enthält dabei vorzugsweise von 5 bis 20 Gew.-%, bevorzugt 6 bis 15 Gew.-%, besonders bevorzugt 7 bis 13 Gew.-% der Komponente a), 0,1 bis 15 Gew.-%, bevorzugt 0,2 Gew.-% bis 10 Gew.-%, besonders bevorzugt 0,3 bis 5 Gew.-% der Komponente b), 0,01 Gew.-% bis 10 Gew.-%, bevorzugt 0,1 bis 5 Gew.-%, besonders bevorzugt 0,15 Gew.-% bis 1,0 Gew.-% der Komponente c), 5 bis 15 Gew.-%, bevorzugt 7 bis 13 Gew.-%, besonders bevorzugt 9 bis 12 Gew.-% der Komponente d).

Die erfindungsgemäßen Zusammensetzungen können in bevorzugter Ausführungsform neben N-Methyl-2-Pyrrolidon (NMP) bis zu 40 Gew.-%, vorzugsweise bis 30 Gew.-% weitere Lösemittel enthalten. Solche weiteren Lösemittel aus der Gruppe der
- Glykole sind beispielsweise Ethylenglykol, Diethylenglykol, Triethylenglykol, Tetraethylenglykol, Polyethylenglykol, Propylenglykol, Dipropylenglykol, Tripropylenglykol, Polypropylenglykol, Monoalkylpolyglykolether wie Monobutylpolyglykolether, endgruppenverschlossene Glykole, wie Tetraethyldiglykoldimethylether Monoethylenglykoldimethylether (Monoglyme), Diethylenglykoldimethylether (Diglyme), Triethylenglykoldimethylether (Triglyme), Triethylenglykoldiethylether, Propylenglykolphenylether, Polyethylenglykoldibutylether ; Polyethylenglykoldiallylether; Polyethylenglykolallylmethylether; Polyalkylenglykole; Polyalkylenglykolallylmethylether;
- Alkohole sind beispielsweise Methanol, Ethanol, n-Propanol, i-Propanol, n-Butanol, i-Butanol, t-Butanol, n-Pentanol, n-Hexanol, 2-Methoxyethanol, 2-Butoxyethanol, 2-(2-Butoxyethoxyl)ethanol, Phenoxyethanol, 2-(2-Butoxyethoxyl)ethanol, 3-Methoxybutanol, 1-Methoxy-2-propanol, sec-Butylalkohol, tert-Butylalkohol, isoButylalkohol, 2-Ethylhexanol, 2-Propoxyethanol, Benzylalkohol, Phenethylalkohol, 1,2,6-Hexantriol;
- Alkane sind beispielsweise, Pentan, Hexan, Heptan;
- chlorierten Alkane sind beispielsweise Methylenchlorid, Ethylendichlorid;
- Aromaten sind beispielsweise Benzol, Toluol, Xylol;
- Nitrile ist beispielsweise Acetonitril;
- Amide sind beispielsweise Dimethylformamid, N,N-Dimethylacetamid, Hexamethylphosphoramid;
- Ketone sind beispielsweise Aceton, Ethylmethylketone, Methylisobutylketon, Methylisobutylketon, Methylamylketon, Methylisoamylketone, 2-Butanon;
- Ether ist beispielsweise Isopropylether;
- Acetate sind beispielsweise Ethylacetat, Propylacetat, i-Propylacetat, Butylacetat, i-Butylacetat, 2-Methoxyethylacetat, 1-Methoxy-2-propylacetat, Ethylenglykoldiacetat;
- Lactate sind beispielsweise Methyllactat, Ethyllactat;
- Phosphate sind beispielsweise
   Trihexyl(tetradecyl)phosphoniumhexafluorophosphat,
   Trihexyl(tetradecyl)phosphoniumtetrafluorophosphat;
- Amine sind beispielsweise Monoethanolamin, Diethanolamin, Triethanolamin;
- Polyole sind beispielsweise Glycerin, Trimethylolethan, Trimethylolpropan;
sowie ferner Tetrahydrofuran, 1,4-Dioxan, Dimethylsulfoxid, Diethylcarbonate, Propylencarbonat, Pyridin, Picolin, Lutidin, Collidin, Cyclohexanon und/oder Wasser.

In einer bevorzugten Ausführungsform enthalten die erfindungsgemäßen bioziden Zusammensetzungen ein Lösungsmittelgemisch aus N-Methyl-2-Pyrrolidon (NMP) und einem Glykol und/oder einem oder mehreren endgruppenverschlossenen Glykol/en, wobei das Mischungsverhältnis von N-Methyl-2-Pyrrolidon (NMP) zu Glycol bzw. endgruppenverschlossenem Glykol im Mischungsverhältnis 1 bis 90 Vol.-%, bevorzugt 5 Vol.-% bis 80 Vol.-%, besonders bevorzugt 10 Vol.-% bis 50 Vol.-% N-Methyl-2-Pyrrolidon zu 1 Vol.-% bis 90 Vol.-%, bevorzugt 5 Vol.-% bis 80 Vol.-%, besonders bevorzugt 10 Vol.-% bis 50 Vol.-% Glykol liegt, bezogen auf die fertigen bioziden Zusammensetzungen.

Ein weiterer besonders bevorzugter Gegenstand der Erfindung sind daher biozide Zusammensetzungen, enthaltend
a) 1,2-Benzoisothiazolin-3-on
b) Chlor-2-methyl-4-isothiazolin-3-on
c) 2-Methyl-4-isothiazolin-3-on
d) 1,6-Dihydroxy-2,5-dioxahexan
e) N-Methyl-2-Pyrrolidon (NMP)
f) Dipropylenglykol (DPG).

Die erfindungsgemäßen bioziden Zusammensetzungen können gegebenenfalls Emulgatoren oder Dispergiermittel enthalten.

Als Dispergiermittel und Emulgator eignen sich Anlagerungsprodukte von 2 bis 30 Mol Ethylenoxid und/oder bis zu 5 Mol Propylenoxid an lineare Fettalkohole mit 8 bis 22 C-Atomen, an Fettsäuren mit 12 bis 22 C-Atomen und an Alkylphenole mit 8 bis 15 C-Atomen in der Alkylgruppe; C₁₂-C₁₈-Fettsäuremono- und -diester von Anlagerungsprodukten von 1 bis 30 Mol Ethylenoxid an Glycerin; Glycerinmono- und -diester und Sorbitanmono- und -diester von gesättigten und ungesättigten Fettsäuren mit 6 bis 22 Kohlenstoffatomen und deren Ethylenoxidanlagerungsprodukten; Anlagerungsprodukte von 15 bis 60 Mol Ethylenoxid an Rizinusöl und/oder gehärtetes Rizinusöl; Polyol- und insbesondere Polyglycerinester wie z.B. Polyglycerinpolyricinoleat und Polyglycerinpoly-12-hydroxystearat. Bevorzugte flüssige Fettsäureester sind PEG-10 Polyglyceryl-2 Laurate und Polyglyceryl-2 Sesquiisostearate.

Des weiteren geeignet sind ethoxylierte und nicht ethoxylierte mono-, di- oder tri-Alkylphosphorsäureester und Alkylarylphosphorsäureester , beispielsweise, Isotridecylphosphorsäureester und deren Salze, Tri-secbutylphenolphosphorsäureester und deren Salze und Tristyrylphenylphosphorsäureester und deren Salze.
Auch kationische Emulgatoren wie mono-, di- und tri-Alkylquats und deren polymere Derivate können eingesetzt werden.

Ebenfalls geeignet sind Gemische von Verbindungen aus zwei oder mehreren dieser Substanzklassen. Die Anlagerungsprodukte von Ethylenoxid und/oder Propylenoxid an Fettalkohole, Fettsäuren, Alkylphenole, Glycerin mono- und -diester sowie Sorbitanmono- und -diester von Fettsäuren oder an Rizinusöl stellen bekannte, im Handel erhältliche Produkte dar. Es handelt sich dabei um Homologengemische, deren mittlerer Alkoxilierungsgrad dem Verhältnis der Stoffmengen von Ethylenoxid und/oder Propylenoxid und Substrat, mit denen die Anlagerungsreaktion durchgeführt wird, entspricht.

Die erfindungsgemäßen bioziden Zusammensetzungen können, 0,1 bis 40 Gew.-%, bevorzugt 1 bis 30 Gew.-%, besonders bevorzugt 3 bis 20 Gew.-% eines oder mehrerer Emulgatoren oder Dispergatoren, bezogen auf die fertigen bioziden Zusammensetzungen enthalten.

Die erfindungsgemäßen bioziden Zusammensetzungen können zusätzlich Tenside, Verdickungsmittel, Antigelmittel, Lösungsvermittler, Kälteschutzmittel, Antischaummittel, Puffer, Netzmittel, Komplexbildner, Sequestriermittel, Elektrolyte, Stellmittel, Duftstoffe und Farbstoffe enthalten.

In einer weiteren Ausführungsform können die erfindungsgemäßen Mittel anionische Tenside enthalten.

Bevorzugte anionische Tenside sind geradkettige und verzweigte Alkylsulfate, -sulfonate, -carboxylate, -phosphate, -sulphosuccinate und -taurate, Alkylestersulfonate, Arylalkylsulfonate und Alkylethersulfate.

Alkylsulfate sind wasserlösliche Salze oder Säuren der Formel ROSO₃M, worin R bevorzugt einen C₁₀-C₂₄-Kohlenwasserstoffrest, besonders bevorzugt einen Alkyl- oder Hydroxyalkylrest mit 10 bis 20 C-Atomen und insbesondere bevorzugt einen C₁₂-C₁₈-Alkyl- oder Hydroxyalkylrest darstellt. M ist Wasserstoff oder ein Kation, vorzugsweise ein Alkalimetallkation (z.B. Natrium, Kalium, Lithium) oder Ammonium oder substituiertes Ammonium, z.B. ein Methyl-, Dimethyl- und Trimethylammoniumkation oder ein quaternäres Ammoniumkation, wie Tetramethylammonium- und Dimethylpiperidiniumkation und quartäre Ammoniumkationen, abgeleitet von Alkylaminen wie Ethylamin, Diethylamin, Triethylamin und deren Mischungen.

Die Alkylethersulfate sind wasserlösliche Salze oder Säuren der Formel RO(A)ₘSO₃M, worin R bevorzugt einen unsubstituierten C₁₀-C₂₄-Alkyl- oder Hydroxyalkylrest, besonders bevorzugt einen C₁₂-C₂₀-Alkyl- oder Hydroxyalkylrest und insbesondere bevorzugt einen C₁₂-C₁₈-Alkyl- oder Hydroxyalkylrest darstellt. A ist eine Ethoxy- oder Propoxyeinheit, m ist eine Zahl von größer als 0, typischerweise zwischen 0,5 und 6, besonders bevorzugt zwischen 0,5 und 3 und M ist ein Wasserstoffatom oder ein Kation, vorzugsweise ein Metallkation (z.B. Natrium, Kalium, Lithium, Calcium, Magnesium), Ammonium oder ein substituiertes Ammoniumkation. Beispiele für substituierte Ammoniumkationen sind Methyl-, Dimethyl-, Trimethylammonium- und quaternäre Ammoniumkationen wie Tetramethylammonium und Dimethylpiperidiniumkationen, sowie solche, die von Alkylaminen, wie Ethylamin, Diethylamin, Triethylamin oder Mischungen davon, abgeleitet sind. Als Beispiele seien genannt C₁₂-C₁₈-Alkyl-polyethoxylat-(1,0)sulfat, C₁₂-C₁₈-Alkyl-polyethoxylat-(2,25)sulfat, C₁₂-C₁₈-Alkyl-polyethoxylat-(3,0)sulfat, C₁₂-C₁₈-Alkyl-polyethoxylat-(4,0)sulfat, wobei das Kation Natrium oder Kalium ist.

Ebenso geeignet sind Alkylsulfonate mit geradkettigen oder verzweigten C₆-C₂₂-Alkylketten, beispielsweise primäre Paraffinsulfonate, sekundäre Paraffinsulfonate, Alkylarylsulfonate, beispielsweise lineare Alkylbenzolsulfonate mit C₅-C₂₀-Alkylketten, Alkylnaphthalensulfonate, Kondensationsprodukte aus Naphthalensulfonat und Formaldehyd, Lignosulfonat, Alkylestersulfonate, d.h. sulfonierte lineare Ester von C₈-C₂₀-Carboxylsäuren (d.h. Fettsäuren), C₈-C₂₄-Olefinsulfonate, sulfonierte Polycarboxylsäuren, hergestellt durch Sulfonierung der Pyrolyseprodukte von Erdalkalimetallcitraten.

Weitere geeignete anionische Tenside sind ausgewählt aus Alkylglycerinsulfaten, Fettacylglycerinsulfaten, Oleylglycerinsulfaten, Alkylphenolethersulfaten, Alkylphosphaten, Alkyletherphosphaten, Isethionaten wie Acylisethionaten, N-Acyltauriden, Alkylsuccinamaten, Sulfosuccinaten, insbesondere Di-nonyl- oder Dioctyl-sulphosuccinate, Monoester der Sulfosuccinate (besonders gesättigte und ungesättigte C₁₂-C₁₈-Monoester) und Diestern der Sulfosuccinate (besonders gesättigte und ungesättigte C₁₂-C₁₈-Diester), Acylsarcosinaten, Sulfaten von Alkylpolysacchariden wie Sulfaten von Alkylpolyglycosiden, verzweigten primären Alkylsulfaten und Alkylpolyethoxycarboxylaten wie denen der Formel RO(CH₂CH₂O)ₖCH₂COO⁻M⁺ worin R eine C₈-C₂₂-Alkylgruppe, k eine Zahl von 0 bis 10 und M ein lösliches, Salz bildendes Kation ist.

Als nichtionische Tenside kommen vorzugsweise Fettalkoholethoxylate (Alkylpolyethylenglykole), Alkylphenolpolyethylenglykole, Alkylmercaptanpolyethylenglykole, Fettaminethoxylate (Alkylaminopolyethylenglykole), Fettsäureethoxylate (Acylpolyethylenglykole), Polypropylenglykolethoxylate (z.B. Pluronics^{®}), Fettsäurealkylolamide (Fettsäureamidpolyethylenglykole), N-Alkyl- und N-Alkoxypolyhydroxyfettsäureamide, Alkylpolysaccharide, Saccharoseester, Sorbitester und Polyglykolether in Betracht.

Als amphotere Tenside kommen vorzugsweise Amphoacetate, besonders bevorzugt Monocarboxylate und Dicarboxylate wie Cocoamphocarboxypropionat, Cocoamidocarboxypropionsäure, Cocoamphocarboxyglycinat (oder auch als Cocoamphodiacetat bezeichnet) und Cocoamphoacetat in Betracht.

Als kationischen Tenside kommen beispielsweise Di-(C₁₀-C₂₄)-Alkyl-dimethylammoniumchlorid oder -bromid, vorzugsweise Di-(C₁₂-C₁₈)-Alkyl-dimethylammoniumchlorid oder -bromid; (C₁₀-C₂₄)-Alkyl-dimethylethylammoniumchlorid oder -bromid; (C₁₀-C₂₄)-Alkyl-trimethylammoniumchlorid oder -bromid, vorzugsweise Cetyltrimethylammoniumchlorid oder -bromid und (C₂₀-C₂₂)-Alkyl-trimethylammoniumchlorid oder -bromid; (C₁₀-C₂₄)-Alkyl-dimethylbenzylammoniumchlorid oder -bromid, vorzugsweise (C₁₂-C₁₈)-Alkyl-dimethylbenzylammoniumchlorid; N-(C₁₀-C₁₈)-Alkyl-pyridiniumchlorid oder -bromid, vorzugsweise N-(C₁₂-C₁₆)-Alkyl-pyridiniumchlorid oder -bromid; N-(C₁₀-C₁₈)-Alkyl-isochinoliniumchlorid, -bromid oder -monoalkylsulfat; N-(C₁₂-C₁₈)-Alkyl-polyoylaminoformylmethylpyridiniumchlorid; N-(C₁₂-C₁₈)-Alkyl-N-methyl-morpholinium-chlorid, -bromid oder -monoalkylsulfat; N-(C₁₂-C₁₈)-Alkyl-N-ethyl-morpholinium-chlorid, -bromid oder -monoalkylsulfat; (C₁₆-C₁₈)-Alkyl-pentaoxethyl-ammonium-chlorid; Diisobutylphenoxyethoxyethyldimethylbenzylammonium-chlorid; Salze des N,N-Diethylaminoethylstearylamids und -oleylamids mit Salzsäure, Essigsäure, Milchsäure, Zitronensäure, Phosphorsäure; N-Acyl-aminoethyl-N,N-diethyl-N-methylammoniumchlorid, -bromid oder -monoalkylsulfat und N-Acylaminoethyl-N,N-diethyl-N-benzyl-ammonium-chlorid, -bromid oder -monoalkylsulfat, wobei Acyl vorzugsweise für Stearyl oder Oleyl steht, in Betracht.

Die erfindungsgemäßen bioziden Zusammensetzungen können 0,1 bis 40 Gew.-%, bevorzugt 1 bis 30 Gew.-%, besonders bevorzugt 3 bis 20 Gew.-% eines oder mehrere Tenside, bezogen auf die fertigen bioziden Zusammensetzungen, enthalten.

Als Verdickungsmittel werden bevorzugt Carboxymethylcellulose und Hydroxyethylcellulose, Xanthan-Gum, Guar-Guar, Agar-Agar, Alginate und Tylosen, ferner höhermolekulare Polyethylenglykolmono- und diester von Fettsäuren, gehärtetes Rizinusöl, Salze von langkettigen Fettsäuren, beispielsweise Natrium-. Kalium-, Aluminium-, Magnesium- und Titan-Stearate oder die Natrium und/oder Kalium-Salze der Behensäure, aber auch Polyacrylate, Polyvinylalkohol und Polyvinylpyrrolidon, sowie Polysaccharide, eingesetzt. Ebenso geeignet sind Copolymere auf Basis von Acryloyldimethyltaurinsäure, wie in EP-A-1 060 142, EP-A-1 028 129, EP-A-1 116 733 beschrieben.

Die Verdickungsmittel können in den erfindungsgemäßen bioziden Zusammensetzungen vorzugsweise in Mengen von 0,01 bis 5 Gew.-% und insbesondere in Mengen von 0,5 bis 2 Gew.-%, bezogen auf die fertigen bioziden Zusammensetzungen, eingesetzt werden.

Geeignete Lösungsvermittler sind Natriumtoluolsulphonat, Natriumcumolsulphonat, Natriumxylolsulphonat, Alkanphosphonsäuren und Alkenyldicarbonsäuren sowie deren Anhydride.

Als Kältestabilisatoren können alle üblichen für diesen Zweck einsetzbaren Stoffe fungieren. Beispielhaft seien Harnstoff, Glycerin und Propylenglykol genannt. Wasserstoffperoxid kann jedes anorganische Peroxid sein, das in wässriger Lösung Wasserstoffperoxid freisetzt, wie etwa Natriumperborat (Monohydrat und Tetrahydrat) und Natriumpercarbonat.
Als Entschäumer eignen sich Fettsäurealkylesteralkoxylate; Organopolysiloxane wie Polydimethylsiloxane und deren Gemische mit mikrofeiner, gegebenenfalls silanierter Kieselsäure; Paraffine; Wachse und Mikrokristallinwachse und deren Gemische mit silanierter Kieselsäure. Vorteilhaft sind auch Gemische verschiedener Schauminhibitoren, beispielsweise solche aus Silikonöl, Paraffinöl und/oder oder Wachsen.

Als Puffer kommen alle üblichen Säuren und deren Salze in Frage. Vorzugsweise genannt seien Phosphatpuffer, Carbonatpuffer, Zitratpuffer.

Als Netzmittel können Alkoholethoxylate/-propoxylate verwendet werden.

Des weiteren enthalten die erfindungsgemäßen Mischungen vorzugsweise Neutralisationsmittel und Stellmittel zum Einstellen der Mittel auf eine Viskosität von 100 bis 2000 mPas, bevorzugt von ca. 600 mPas. Bevorzugte Stellmittel sind anorganische Salze, besonders bevorzugt Ammonium- oder Metallsalze, insbesondere von Halogeniden, Oxiden, Carbonaten, Hydrogencarbonaten, Phosphaten, Sulfaten und Nitraten, insbesondere Natriumchlorid. Als Neutralisationsmittel bevorzugt sind NaOH und KOH.

Als Elektrolyt können die erfindungsgemäßen Mittel anorganische und organische Salze enthalten. Geeignet sind Alkali-, Erdalkali-, Metall- oder Ammoniumhalogenide, -nitrate, -phosphate, -carbonate, -hydrogencarbonate, -sulfate, -silikate, acetate, -oxide, -citrate oder -polyphosphate. Bevorzugt eingesetzt werden beispielsweise CaCl₂, MgCl₂, LiCl, KCI, NaCl, K₂SO₄, K₂CO₃, MgSO₄, Mg(NO₃)₂, ZnCl₂, ZnO, MgO,ZnSO₄, CuSO₄, Cu(NO₃)₂.

Als organische Salze kommen Ammonium- oder Metallsalze, bevorzugt der Glykolsäure, Milchsäure, Zitronensäure, Weinsäure, Mandelsäure, Salicylsäure, Ascorbinsäure, Brenztraubensäure, Fumarsäure, Retinoesäure, Sulfonsäuren, Benzoesäure, Kojisäure, Fruchtsäure, Äpfelsäure, Gluconsäure, Galacturonsäure in Betracht. Als Elektrolyt können die Zusammensetzungen auch Mischungen verschiedener Salze enthalten.

Die erfindungsgemäßen Zusammensetzungen können Elektrolyte in Mengen von 0,01 bis 50 Gew.-%, bevorzugt 0,1 bis 20 Gew.-%, besonders bevorzugt 0,5 bis 10 Gew.-%, bezogen auf die biozide Zusammensetzung enthalten.

Als Sequestriermittel eignen sich beispielsweise Natriumtripolyphosphat (STPP), Ethylendiamintetraessigsäure (EDTA), deren Salze, Nitrilotriessigsäure (NTA), Polyacrylat, Phosphonat, beispielsweise 1-Hydroxyethan-1,1-diphosphonsäure (HEDP), Salze von Polyphosphorsäuren, wie Ethylendiamintetramethylenphosphonsäure (EDTMP) und Diethylentriaminpentamethylenphosphonsäure (DTPMP), Oxalsäure, -salz, Zitronensäure, Zeolith, Carbonate und Polycarbonate.

Als Komplexbildner kommen Phosphonate, Aminophosphonate und Aminocarboxylate in Betracht.

Die erfindungsgemäßen bioziden Zusammensetzungen werden bevorzugt zur Konservierung von Farben, Lacken, Polymeremulsionen, Kühlschmierstoffen, Metallbearbeitungshilfsmitteln, Pflanzenschutzformulierungen, Bauchemikalien, Reinigungsmitteln, Plastik und Klebstoffen eingesetzt.

Die erfindungsgemäßen bioziden Zusammensetzungen können darüber hinaus unmittelbar oder in Verdünnung als Desinfektionsmittel verwendet werden.

Die erfindungsgemäßen bioziden Zusammensetzungen können darüber hinaus in Beschichtungsmaterialien für Oberflächen eingearbeitet werden. Oberflächen, die mit solchen Beschichtungsmaterialien beschichtet werden, werden dadurch biozid ausgerüstet.

Für alle genannten Anwendungen gelten die bereits genannten Einsatzmengen der bioziden Wirkstoffe.

Die bioziden Formulierungen besitzen bevorzugt einen pH-Wert von 1 bis 13, besonders bevorzugt 3 bis 9, insbesondere 4 bis 8.

### Beispiele

Die nachfolgenden Beispiele dienen der näheren Erläuterung der Erfindung. Alle Prozentangaben sind Gewichtsprozente, sofern nicht anders angegeben.

**Tabelle 1: Löslichkeiten von bioziden Wirksubstanzen in verschiedenen Lösemitteln**

| Beispiel | Wirkstoff | Lösemittel | Löslichkeit [25°C] |
|---|---|---|---|
| 1 | 2-Bromo-2-nitro-1,3-propandiol | N-Methylpyrrolidon (NMP) | 51 % |
| 2 (V) | 2-Bromo-2-nitro-1,3-propandiol | Dipropylenglykol (DPG) | 26 % |
| 3 | 3-Jod-2-propinyl-butylcarbamat | N-Methylpyrrolidon (NMP) | 45 % |
| 4 (V) | 3-Jod-2-propinyl-butylcarbamat | Dipropylenglykol (DPG) | 34 % |
| 5 | 1,6-Dihydroxy-2,5-dioxahexan 1,2-Benzisothiazolin-3-on 5-Chlor-2-methyl-4-isothiazolin-3-on 2-Methyl-4-isothiazolin-3-on | N-Methylpyrrolidon (NMP) | 51 % |
| 7 (V) | 1,6-Dihydroxy-2,5-dioxahexan 1,2-Benzisothiazolin-3-on 5-Chlor-2-methyl-4-isothiazolin-3-on 2-Methyl-4-isothiazolin-3-on | Dipropylenglykol (DPG) | 28 % |
| 8 | 1,2-Dibromo-2,4-dicyanobutan | N-Methylpyrrolidon (NMP) | 39 % |
| 9 (V) | 1,2-Dibromo-2,4-dicyanobutan | Dipropylenglykol (DPG) | 21 % |

Die Löslichkeiten wurden durch schrittweises Aufkonzentrieren einer Startlösung bei 10 Gew.-% bei 25°C ermittelt.

**Tabelle 2: Lagerstabiltät von bioziden Wirksubstanzen in verschiedenen Lösemitteln bei +5°C, +20°C und +50°C und 14 Tagen Lagerdauer**

| Beispiel | Wirkstoff [Gew.-%] | Lösemittel | Lagerstabilität bei +5°C | Lagerstabilität bei +20°C | Lagerstabilität bei +50°C |
|---|---|---|---|---|---|
| 10 | 1,2-Benzisothiazolin-3-on [40] | N-Methylpyrrolidon (NMP) | klare Lösung keine Kristalle | klare Lösung keine Kristalle | klare Lösung keine Kristalle |
| 11 (V) | 1,2-Benzisothiazolin-3-on [6] | Dipropylenglykol (DPG) | starke Kristallbildung | klare Lösung keine Kristalle | klare Lösung keine Kristalle |
| 12 | 3-Jod-2-propinyl-butylcarbamat [45] | N-Methylpyrrolidon (NMP) | klare Lösung keine Kristalle | klare Lösung keine Kristalle | klare Lösung keine Kristalle |
| 13 (V) | 3-Jod-2-propinyl-butylcarbamat [34] | Dipropylenglykol (DPG) | Kristallbildung fest | klare Lösung keine Kristalle | klare Lösung keine Kristalle |
| 14 | 1,6-Dihydroxy-2,5-dioxahexan 1,2-Benzisothiazolin-3-on 5-Chlor-2-methyl-4-isothiazolin-3-on 2-Methyl-4-isothiazolin-3-on [gesamt: 51] | N-Methylpyrrolidon (NMP) | klare Lösung keine Kristalle | klare Lösung keine Kristalle | klare Lösung keine Kristalle |
| 15 (V) | 1,6-Dihydroxy-2,5-dioxahexan 1,2-Benzisothiazolin-3-on 5-Chlor-2-methyl-4-isothiazolin-3-on 2-Methyl-4-isothiazolin-3-on [gesamt: 28] | Dipropylenglykol (DPG) | starke Kristallbildung | klare Lösung keine Kristalle | klare Lösung keine Kristalle |
| 16 | 1,6-Dihydroxy-2,5-dioxahexan 1,2-Benzisothiazolin-3-on 5-Chlor-2-methyl-4-isothiazolin-3-on 2-Methyl-4-isothiazolin-3-on | N-Methylpyrrolidon (NMP) Dipropylenglykol (DPG) NMP/DPG ..../.... | klare Lösung keine Kristalle | klare Lösung keine Kristalle | klare Lösung keine Kristalle |
| 17 | 1,2-Dibromo-2,4-dicyanobutan [39] | N-Methylpyrrolidon (NMP) | klare Lösung keine Kristalle | klare Lösung keine Kristalle | klare Lösung keine Kristalle |
| 18 (V) | 1,2-Dibromo-2,4-dicyanobutan [21] | Dipropylenglykol (DPG) | starke Kristallbildung | klare Lösung keine Kristalle | klare Lösung keine Kristalle |

### Formulierungsbeispiele:

### Beispiel 19

| | |
|---|---|
| 1,2-Benzisothiazolin-3-on | 40,0 % |
| N-Methylpyrrolidon (NMP) | 60,0 % |

### Beispiel 20 (V)

| | |
|---|---|
| 1,2-Benzisothiazolin-3-on | 6,0 % |
| Dipropylenglykol (DPG) | 94,0 % |

### Beispiel 21

| | |
|---|---|
| 3-Jod-2-propinyl-butylcarbamat | 45,0 % |
| N-Methylpyrrolidon (NMP) | 55,0 % |

### Beispiel 22 (V)

| | |
|---|---|
| 3-Jod-2-propinyl-butylcarbamat | 34,0 % |
| Dipropylenglykol (DPG) | 66,0 % |

### Beispiel 23

| | |
|---|---|
| Nipacide FC | 12,2 (5,5 % Aktivgehalt) |
| Nipacide CI | 4,2 (0,59 % Aktivgehalt) |
| Nipacide BIT | 10 (7,5 % Aktivgehalt) |
| NMP | ad 100% |

### Beispiel 24 (V)

| | |
|---|---|
| Nipacide FC | 12,2 (5,5 % Aktivgehalt) |
| Nipacide Cl | 4,2 (0,59 % Aktivgehalt) |
| Nipacide BIT | 10 (7,5 % Aktivgehalt) |
| DPG | ad 100% |

### Beispiel 25

| | |
|---|---|
| Nipacide FC | 12,2 (5,5 % Aktivgehalt) |
| Nipacide Cl | 4,2 (0,59 % Aktivgehalt) |
| Nipacide BIT | 10 (7,5 % Aktivgehalt) |
| NMP | 30% |
| DPG | ad 100% |

### Beispiel 26

| | |
|---|---|
| 1,2-Dibromo-2,4-dicyanobutan | 39,0 % |
| NMP | 61,0% |

### Beispiel 27 (V)

| | |
|---|---|
| 1,2-Dibromo-2,4-dicyanobutan | 21,0 % |
| Dipropylenglykol (DPG) | 79,0 % |

### Herstellweise der Beispiele 19 - 27

Zur Herstellung der oben genannten Beispiele wird / werden das / die jeweilige(n) Lösemittel in einem Becherglas vorgelegt und anschließend der / die Wirkstoff(e) unter Rühren bei Raumtemperatur zugegeben, bis eine klare und homogene Lösung entstanden ist.

### Chemische Bezeichnung der eingesetzten Handelsprodukte:

Nipacide^{®} FC: 1,6-Dihydroxy-2,5-dioxahexan

Nipacide^{®} BIT = 1,2-Benzisothiazolin-3-on

Nipacide^{®} CI = 5-Chloro-2-methyl-4-isothiazolin-3-on/2-Methyl-4-isothiazolin-3-on

## Patentansprüche

1. Zusammensetzungen, enthaltend mindestens ein Isothiazolin mit biozider Wirksamkeit und N-Methyl-2-Pyrrolidon.

2. Zusammensetzung nach Anspruch 1, worin mindestens ein nicht halogeniertes Isothiazolin enthalten ist.

3. Zusammensetzung nach Anspruch 1 und/oder 2, worin mindestens ein Isothiazolin ausgewählt aus 2-Methyl-3-isothiazolin, 2-Methyl-4-Isothiazolin-3-on, 2-Ethyl-3-isothiazolin, 2-Propyl-3-isothiazolin, 2-Isopropyl-3-isothiazolin, 2-Butyl-3-isothiazolin (worin Butyl für n-Butyl, iso-Butyl oder tert-Butyl stehen kann), 2-n-Octyl-3-Isothiazolin, 2-Octyl-4-isothiazolin-3-on oder 1,2-Benzisothiazolin-3-on oder sein Natriumsalz enthalten ist.

4. Zusammensetzung nach einem oder mehreren der Ansprüche 1 bis 3, worin mindestens ein halogeniertes Isothiazolin enthalten ist.

5. Zusammensetzung nach einem oder mehreren der Ansprüche 1 bis 4, worin mindestens ein Isothiazolin ausgewählt aus 5-Chloro-2-Methyl-3-Isothiazolin, 5-Chloro-2-Methyl-4-Isothiazolin-3-on oder 4,5-Dichloro-2-(n-octyl)-4-isothiazolin-3-on enthalten ist.

6. Zusammensetzung nach einem oder mehreren der Ansprüche 1 bis 5, enthaltend eine Mischung aus mindestens 2 verschiedenen Isothiazolinen, die entweder alle nicht halogeniert sind, oder von denen eines halogeniert ist, und das andere oder die anderen nicht halogeniert sind.

7. Zusammensetzung nach einem oder mehreren der Ansprüche 1 bis 6, enthaltend
a) mindestens ein Isothiazolin mit biozider Wirksamkeit in Gewichtsmengen von 10 % bis 60 %, bezogen auf die biozide Zusammensetzung, und
b) N-Methyl-2-Pyrrolidon (NMP).

8. Zusammensetzung nach einem oder mehreren der Ansprüche 1 bis 7, enthaltend
a) mindestens ein nicht halogeniertes Isothiazolin mit biozider Wirksamkeit in Gewichtsmengen von 10 % bis 60 % bezogen auf die biozide Zusammensetzung, und
b) mindestens ein halogeniertes Isothiazolin mit biozider Wirksamkeit in Gewichtsmengen von 0,1 bis 15 Gew.-% bezogen auf die biozide Zusammensetzung, und
c) N-Methyl-2-Pyrrolidon (NMP).

9. Zusammensetzung nach einem oder mehreren der Ansprüche 1 bis 8, enthaltend
a) mindestens ein nicht halogeniertes Isothiazolin mit biozider Wirksamkeit in Gewichtsmengen von 10 % bis 60 % bezogen auf die biozide Zusammensetzung, und
b) mindestens ein halogeniertes Isothiazolin mit biozider Wirksamkeit in Gewichtsmengen von 0,1 bis 15 Gew.-% bezogen auf die biozide Zusammensetzung,
c) mindestens eine weitere biozide Wirksubstanz in Gewichtsmengen von 3 bis 15 Gew.-% bezogen auf die biozide Zusammensetzung, und
d) N-Methyl-2-Pyrrolidon (NMP).

10. Zusammensetzung nach einem oder mehreren der Ansprüche 1 bis 9, enthaltend
a) 1,2-Benzoisothiazolin-3-on,
b) Chlor-2-methyl-4-isothiazolin-3-on,
c) 2-Methyl-4-isothiazolin-3-on,
d) 1,6-Dihydroxy-2,5-dioxahexan, und
e) N-Methyl-2-Pyrrolidon (NMP).

11. Verwendung von N-Methyl-2-Pyrrolidon (NMP) als Lösemittel für mindestens ein Isothiazolin mit biozider Wirksamkeit.

12. Verfahren zur Herstellung einer Lösung, enthaltend mindestens ein Isothiazolin mit biozider Wirksamkeit, indem man das Isothiazolin mit biozider Wirksamkeit in N-Methyl-2-Pyrrolidon löst.

13. Verwendung einer Zusammensetzung gemäß einem oder mehreren der Ansprüche 1 bis 10 in Mengen von 0,0001 Gew.-% bis 5 Gew.-% des oder der bioziden Wirkstoffe, bezogen auf das zu behandelnde Substrat oder das behandelte Endprodukt, zur Konservierung von Farben, Lacken, Polymeremulsionen, Kühlschmierstoffen, Metallbearbeitungshilfsmitteln, Pflanzenschutzformulierungen, Bauchemikalien, Reinigungsmitteln, Plastik und Klebstoffen, als Desinfektionsmittel oder als Bestandteil von Beschichtungsmaterialien für Oberflächen zu deren biozider Ausrüstung.
